# EUROPEAN PATENT APPLICATION

(11) **EP 2 852 022 A2**
(43) Date of publication of application: **25.03.2015**
(21) Application number: 14184124.7
(22) Date of filing: 09.09.2014
(51) Int. Cl.: H02J 7/00, H01M 10/48

(54) **Charging circuit**

(30) Priority: 20.09.2013 US 201314032365
(71) Applicant: Acco Brands Corporation, Lake Zurich, IL 60047-8997 (US)
(72) Inventor: Li, Qiumin, Coquitlam, British Columbia V3E 2V5 (CA); Lee, Samson S., Vancouver, British Columbia V6R 3E6 (CA)
(74) Representative: EP&C

(57) **Abstract**

A charging circuit (10) for charging a portable electronic device (11) includes a port (13) configured to be coupled to the portable electronic device (11), a power switch (14) coupled to the port (13) and configured to be coupled to a power supply (12), and a control circuit (16) coupled to the power switch (14) and the port (13). The power switch (14) is switchable between an open state and a closed state. The control circuit (16) is operable to control the power switch (14) based on an amount of charging current drawn by the portable electronic device (11) through the port (13).

## Description

### BACKGROUND

The present invention relates to circuits for charging electronic devices and, more particularly, to circuits for charging portable electronic devices such as laptop computers, tablet computers, smartphones, and the like.

Portable electronic devices need to be charged periodically. Different types of devices, however, require different voltages and/or charging profiles in order to properly charge. Chargers are usually only configured to charge one type of device or group of devices having the same charging profile.

### SUMMARY

In one embodiment, the invention provides a charging circuit for charging a portable electronic device. The charging circuit includes a port configured to be coupled to the portable electronic device, a power switch coupled to the port and configured to be coupled to a power supply, and a control circuit coupled to the power switch and the port. The power switch is switchable between an open state and a closed state. The control circuit is operable to control the power switch based on an amount of charging current drawn by the portable electronic device through the port.

In a possible embodiment the control circuit converts the amount of charging current drawn by the portable electronic device to a voltage, compares the voltage to a reference voltage, and holds the power switch in the closed state if the voltage exceeds a reference voltage.

In another possible embodiment the control circuit includes an oscillator coupled to the power switch, and the oscillator oscillates the power switch between the open state and the closed state.

In a further particular embodiment the control circuit further includes a current-to-voltage converter coupled to the port and the power switch, and the current-to-voltage converter converts the amount of charging current drawn by the portable device through the port to a voltage.

In yet a further particular embodiment the current-to-voltage converter includes a precision resistor and an amplifier.

In yet a further particular embodiment the control circuit further includes a comparator coupled to the oscillator and the current-to-voltage converter, and the comparator compares the voltage to a reference voltage and, if the voltage exceeds the reference voltage, stops oscillation of the oscillator to hold the power switch in the closed state.

A possible embodiment of the charging circuit of the invention, further comprises a data switch coupled to the port, wherein the data switch is operable to transfer data between the portable electronic device and a host device.

Particularly the data switch, when actuated, may override the control circuit and hold the power switch in the closed state.

A possible embodiment of the charging circuit according to the invention further comprises a resistor network coupled to the port, wherein the resistor network represents a charging profile of the portable electronic device.

A possible embodiment of the charging circuit according to the invention, further comprises a plurality of resistor networks coupled to the port, each resistor network representing a different charging profile. This embodiment also comprises a multiplexer coupled between the plurality of resistor networks and the port, the multiplexer operable to cycle through the plurality of resistor networks and to select one of the plurality of resistor networks that has a charging profile corresponding to a charging profile of the portable electronic device.

In a possible embodiment of the charging circuit according to the invention, the control circuit is further operable to cease operation of the charging circuit if the amount of charging current drawn by the portable electronic device through the port exceeds a predetermined threshold.

In a particular embodiment the invention provides a charging circuit for charging a portable electronic device from a power supply. The charging circuit includes a port configured to be coupled to the portable electronic device, a power switch coupled to the port and configured to be coupled to the power supply, an oscillator coupled to the power switch, a current-to-voltage converter coupled to the port and the power switch, and a comparator coupled to the oscillator and the current-to-voltage converter. The power switch is switchable between an open state and a closed state. The oscillator is operable to oscillate the power switch between the open and closed states. The current-to-voltage converter is operable to convert an amount of current drawn by the portable electronic device through the port into the voltage. The comparator is operable to stop oscillation of the oscillator when the voltage exceeds a reference voltage to hold the power switch in the closed state and charge the portable electronic device.

The invention also relates to a method of charging a portable electronic device. The method includes connecting a portable electronic device to the port, oscillating the power switch between an open state and a closed state, converting a current drawn by the portable electronic device into a voltage, comparing the voltage to a reference value, outputting a signal from the comparator to the oscillator to stop oscillating, holding the power switch in the closed stated when the voltage meets a condition with respect to the reference voltage, and charging the portable electronic device.

In a possible embodiment of the method outputting the signal from the comparator includes outputting the signal from the comparator to the oscillator to stop oscillation of the oscillator and hold the power switch in the closed state when the voltage exceeds the reference voltage.

In another possible embodiment of the method the charging circuit further includes a data switch coupled to the port, and further comprises actuating the data switch to transfer data between the portable electronic device and a host device.

In yet another possible embodiment of the method the charging circuit further includes a plurality of resistor networks and a multiplexer coupled between the plurality of resistor networks and the port, wherein each resistor network has a different charging profile, and further comprises:
cycling through the plurality of resistor networks; and
selecting one of the plurality of resistor networks that has a charging profile corresponding to a charging profile of the portable electronic device.

Preferably, the multiplexer is coupled to the oscillator, and cycling through the plurality of resistor networks includes oscillating the oscillator to trigger the multiplexer to cycle through the plurality of resistor networks.

Other aspects of the invention will become apparent by consideration of the detailed description and accompanying drawings.

### BRIEF DESCRIPTION OF THE DRAWINGS

Fig. 1 is a schematic diagram of a charging circuit embodying the invention.
Fig. 2 is a timing diagram of the charging circuit shown in Fig. 1.
Fig. 3 is a schematic diagram of another charging circuit embodying the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

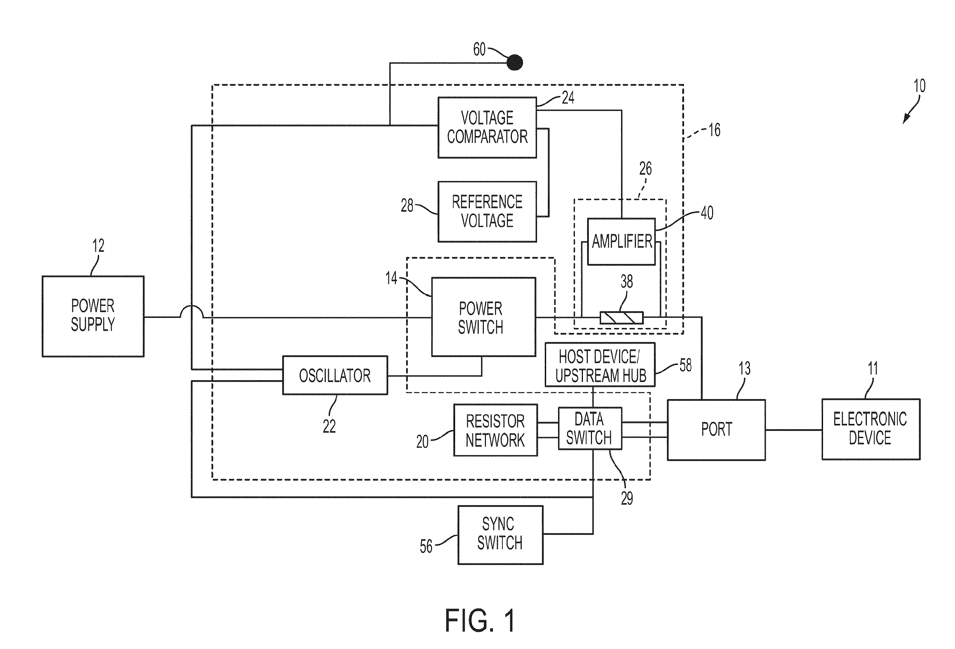

Fig. 1 illustrates a charging circuit 10 for charging a portable electronic device 11. In some embodiments, the charging circuit 10 may be part of a cabinet or other structure that is designed to receive and store a plurality of portable electronic devices 11 simultaneously. In such embodiments, the charging circuit 10 charges several electronic devices 11 at a time. The charging circuit 10 automatically begins charging the electronic device 11 if the electronic device 11 recognizes the charging circuit 10 as a suitable charging circuit. In further embodiments, such as the illustrated embodiment, the charging circuit 10 is also configured to sync data on the portable electronic device 11.

The portable electronic device 11 may be, for example, a laptop computer, a tablet computer, a smartphone, a cellphone, or a two-way radio. In some embodiments, the portable electronic device 11 may be an IPAD tablet computer sold by Apple, Inc. In other embodiments, other types of portable electronic devices that periodically require charging may be connected to the circuit 10. The electronic device 11 can include a USB port, a micro USB port, or another suitable power and/or data port to connect the device 11 to the charging circuit 10.

The charging circuit 10 is configured to connect the electronic device 11 to a power supply 12 (e.g., a 120 volt AC wall outlet) to charge the device 11 using power from the power supply 12. If necessary, the output of the power supply 12 is reduced to a voltage suitable for charging the electronic device 11. For example, a 120 volt AC power supply can include an AC/DC converter to convert the output of the power supply to a DC voltage, and can include a DC/DC converter to reduce the voltage of the power supply. Alternatively, the output of the power supply could be reduced by only an AC/DC converter. In the illustrated embodiment, the power supply 12 includes circuitry to reduce the output to 5 volts DC. In other embodiments, the power supply 12 may be configured to output other desired voltages.

The illustrated charging circuit 10 includes a port 13, a power switch 14, and a control circuit 16. The port 13 is coupled to the power switch 14 and configured to be coupled to the electronic device 11. In the illustrated embodiment, the port 13 is a USB port that is configured to be coupled to the port of electronic device 11 by a cable. In other embodiments, the port 13 may be plugged directly into the port of the electronic device 11 without a cable. The USB port 13 includes a Vbus port, a D+ port, and a D- port. The Vbus port is coupled to the power supply 12 through the power switch 14 to supply power to the electronic device 11. The D+ and D- ports help ensure that the charging circuit 10 is recognized as a suitable charging circuit by the electronic device 11.

The power switch 14 is coupled to the port 13 and to the power supply 12. The power switch 14 switches between an open state, in which the port 13 is disconnected from the power supply 12, and a closed state, in which the port 13 is connected to the power supply 12. When the power switch 14 is in the closed state, the power supply 12 provides charging current to the electronic device 11 through the port 13.

The control circuit 16 is coupled to the port 13 and the power switch 14 to control operation of the charging circuit 10. In particular, the control circuit 16 controls whether the power switch 14 is held in the closed state to charge the electronic device. The control circuit 16 detects when the electronic device 11 is connected to the port 13. The control circuit 16 also holds the power switch 14 in the closed state if the electronic device 11 recognizes the charging circuit 10 as a suitable charging circuit for the connected electronic device 11.

The illustrated control circuit 16 includes a resistor network 20, an oscillator 22, a comparator 24, and a current-to-voltage converter 26. The resistor network 20 is coupled to the port 13 and simulates a plug-in profile for the electronic device 11. The resistor network 20 allows the electronic device 11 to identify the charging circuit 10 as a recognized charging circuit. In the illustrated embodiment, the resistor network 20 is coupled to the D+ and D- ports of the electronic device 11 through the port 13 to perform an identification protocol. Depending on the type of electronic device 11 that is coupled to the charging circuit the identification protocol is different. For example, for an IPAD tablet computer sold by Apple, Inc., the identification protocol includes applying a first reference voltage to the D+ port and a second reference voltage to the D- port. As another example, some electronic devices are compliant to USBIF identification protocol. The USBIF protocol includes shorting the D+ and the D- ports on the electronic device. In the illustrated embodiment, a switch 29 (e.g., a USB switch) selectively connects the resistor network 20 to the port 13 to control the connections to the D+ and D- ports. The USB switch 29 determines which connections to make to the D+ and D- ports of the USB port 13. When the switch 29 connects the resistor network 20 to the port 13 and the electronic device 11 has recognized the charging circuit 10, the electronic device 11 begins to draw a current through the port 13.

The comparator 24 is coupled the current-to-voltage converter 26, the oscillator 22, and a reference voltage 28. The comparator 24 compares a signal from the current-to-voltage converter 26 to the reference voltage 28. The comparator 24 is operable to output a Hi signal or a Lo signal to the oscillator 22 based on the comparison between the signal from the current-to-voltage converter 26 and the reference voltage 28. For example, if the voltage signal from the current-to-voltage converter 26 is lower than the reference voltage 28, the comparator 24 outputs the Hi signal (or logic "1 ") to the oscillator 22. If the voltage signal from the current-to-voltage converter 26 is higher than the reference voltage 28, the comparator 24 outputs the Lo signal (or logic "0") to the oscillator 22.

The current-to-voltage converter 26 is coupled to the comparator 24, the power switch 14, and the port 13. The current-to-voltage converter 26 detects a current drawn by the electronic device 11 through the port 13. The current-to-voltage converter 26 outputs a voltage signal to the comparator 24 proportional to the amount of current drawn by the electronic device 11. In the illustrated embodiment, the current-to-voltage converter 26 includes a precision resistor 38 and an amplifier 40. The precision resistor 38 is coupled to the power switch 14 and the port 13. The amplifier 40 is coupled to the comparator 24 and is coupled in parallel to the precision resistor 38. The amplifier 40 converts the current through the precision resistor 38 into a voltage signal that feeds into the comparator 24. In other embodiments, other suitable current-to-voltage converters may also or alternatively be employed. For example, in some embodiments, the current-to-voltage converter 26 may be part of an integrated circuit that converts an input current to a proportional voltage signal.

The oscillator 22 is coupled to the power switch 14 and the comparator 24. The oscillator 22 may be any type of suitable multivibrator such as, for example, an astable multivibrator, monostable multivibrator, or bistable multivibrator. In the illustrated embodiment, the oscillator is an astable multivibrator. The oscillator receives the Hi and Lo signals from the comparator 24, which control the operation of the oscillator 22. When the oscillator 22 receives the Hi signal (or logic "1 ") from the comparator 24, the oscillator 22 will run freely and generate a pulse train. The pulse train continually cycles the power switch 14 between the open and closed states. When the oscillator 22 receives the Lo signal (or logic "0") from the comparator 24, the oscillator 22 stops generating the pulse train and latches the power switch 14 in the closed state. In some embodiments, the oscillator 22 can include two logic gates, two resistors, and a capacitor to selectively generate the pulse train and control operation of the power switch 14. In such embodiments, the logic gates may be NAND gates. In other embodiments, other suitable oscillators may also or alternatively be employed.

In the illustrated embodiment, the charging circuit 10 also includes a sync switch 56. The illustrated sync switch 56 is a manual actuator such as, for example, a push button, a pivotable switch, a rotatable knob, or the like. In other embodiments, the sync switch 56 may be an electronic switch that is automatically actuated in response to certain conditions of the charging circuit 10 and/or the device 11. The sync switch 56 selectively couples the control circuit 16 (and, thereby, the electronic device 11) to sync data on the device 11. The sync switch 56 is operable to switch between two states: an open state, in which the electronic device 11 is disconnected from the host device 58, and a closed state, in which the electronic device 11 is coupled to the host device 58. The illustrated sync switch 56 is coupled to the electronic device 11 through the USB switch 29 and the port 13. When the sync switch 56 is closed to connect the electronic device 11 to the host device 58, data transmission occurs through the switch 29 and the port 13 so that the electronic device 11 syncs with the host device 58. In some embodiments, the charging circuit 10 includes a plurality of ports 13 to connect multiple electronic devices 11 I to the circuit simultaneously. In such embodiments, the sync switch 56 controls data transmission between the host device 58 and each of the electronic devices 11 connected to the ports 13.

The illustrated sync switch 56 is also coupled to the oscillator 22 to override operation of the control circuit 16. When the sync switch 56 is in the closed state, a signal (i.e., a Lo signal or logic "0") is sent to the oscillator 22 to hold the power switch 14 in the closed state. In this state, the electronic device 11 draws a charging current from the power supply 12 depending on, for example, the capability of the host device 58, a protocol of the host device 58, and the availability of a compatible protocol in the electronic device 11. The current-to-voltage converter 26 and the comparator 24 continue to function as described above, but the output of the comparator 24 is overridden by the sync switch 56 to inhibit oscillation of the power switch 14.

In the illustrated embodiment, the charging circuit 10 also includes an indicator 60. The indicator 60 provides a visual and/or audible indication to a user regarding whether the connected electronic device 11 is charging, syncing, or both. In the illustrated embodiment, the indicator 60 is a light emitting diode (LED), although other suitable indicators may also or alternatively be employed. The indicator 60 can be turned on continuously, can flash, or can blink to indicate the current state of the electronic device 11. Additionally or alternatively, the indicator 60 may display different colors, each of which represents a different status of the electronic device 11. In some embodiments, the charging circuit 10 may include a plurality of indicators (e.g., two indicators). In such embodiments, one indicator could indicate when the connected electronic device 11 is charging, while the other indicator could indicate when the connected electronic device 11 is syncing.

In some embodiments, the comparator 24 can control additional components of the charging circuit 10. For example, the comparator 24 can inhibit operation of the charging circuit 10 based on the current drawn by the portable electronic device 11. Thus, if the current drawn by the portable electronic device 11 is too high for the components of the charging circuit 10, the comparator 24 will output a signal to cease oscillation of the oscillator 22 and effectively shut down the charging circuit 10. The comparator 24 may be coupled to a second reference voltage to prevent the current drawn by the portable electronic device 11 from exceeding a predetermined threshold. Also, the comparator 24 can output signals to the charging status indicator 60 to control the status of the indicator 60. In addition, the comparator 24 can output signals to a cooling fan positioned adjacent the circuit 10 to turn the fan on and off.

In operation, a user connects the electronic device 11 to the port 13 of the charging circuit 10 to charge the device 11. The control circuit 16 determines when the electronic device 11 is coupled to the charging circuit 10. After the electronic device 11 recognizes the charging circuit 10 as a suitable charging circuit, the control circuit 16 (specifically, the comparator 24) outputs a signal to hold the power switch 14 in the closed state so that the electronic device 11 I draws current from the power supply 12. If the current drawn by the electronic device 11 exceeds a predetermined threshold, the control circuit 16 (specifically, the comparator 24) outputs a signal to cease operation of the charging circuit 10. Alternatively, if the sync switch 56 is closed, the electronic device 11 syncs with the host device 58 and charges through the power switch 14, regardless of the output from the control circuit 16.

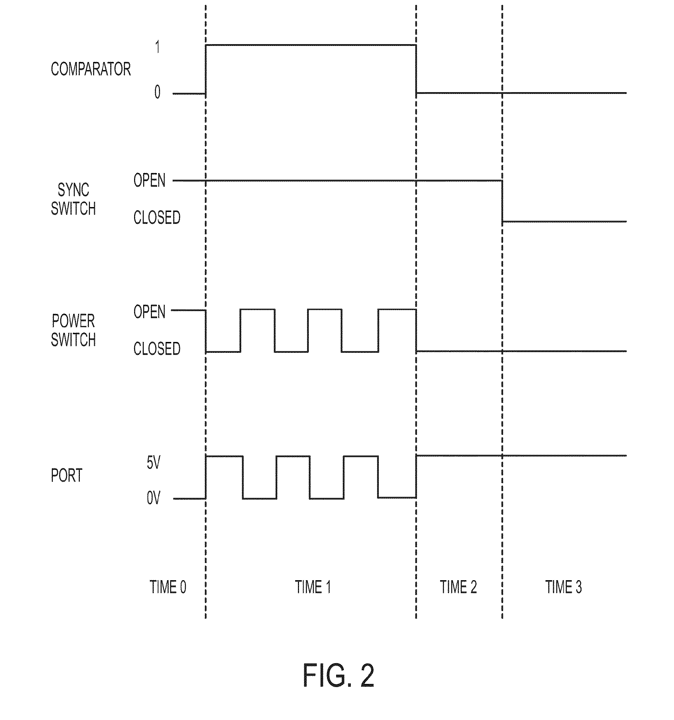

Fig. 2 is a timing diagram depicting operation of the charging circuit 10. The timing diagram may be different depending on the type of multivibrator or oscillator used in the control circuit 16. In the illustrated embodiment, the timing diagram corresponds to an embodiment where the oscillator 22 is an astable multivibrator. At Time 0, the electronic device 11 is not coupled to the port 13. During this time, the comparator 24 outputs the Lo signal (logic "0") so that the power switch 14 is in the open state, the sync switch 56 is open, and the port 13 receives 0 volts from the power supply 12.

Time 1 depicts when the electronic device 11 is coupled to the port 13. During this time, the sync switch 56 is still open, but the electronic device 11 is performing an identification procedure with the charging circuit 10. The comparator 24 outputs the Hi signal (logic "1") so that the power switch 14 oscillates between the open state and the closed state. As the power switch 14 oscillates, the port 13 alternately receives 0 volts and 5 volts from the power supply 12 (i.e., the port 13 receives 0 volts when the power switch 14 is in the open state and receives 5 volts when the power switch 14 is in the closed state).

Time 2 depicts when the electronic device 11 recognizes the charging circuit 10 as a suitable circuit for charging. That is, the voltage from the current-to-voltage converter 26 is higher than the reference voltage 28 so that the comparator outputs the Lo signal (logic "0") to the oscillator 22. During Time 2, the sync switch 56 remains open, and the power switch 14 is held in the closed state. As such, the port 13 receives 5 volts from the power supply 12 to charge the connected electronic device 11.

Time 3 depicts when the sync switch 56 is closed. During this time, the sync switch 56 outputs a signal to the oscillator 22 to inhibit the oscillator 22 (and, thereby, the power switch 14) from oscillating. The power switch 14 remains in the closed state so that the port 13 receives 5 volts from the power supply 12. Thus, during Time 3, the electronic device 11 syncs with the host device 58 and, if necessary, charges.

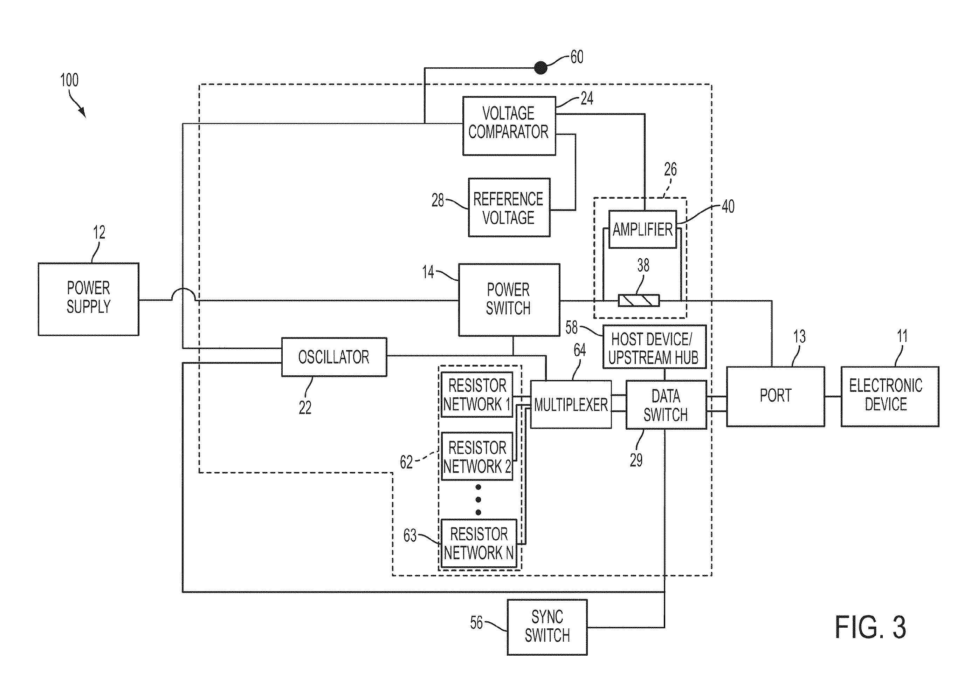

Fig. 3 illustrates another charging circuit 100 for charging the portable electronic device 11. The charging circuit 100 includes similar components as the charging circuit 10 shown in Fig. 1, and like parts have been given the same reference numbers.

In the illustrated embodiment, the control circuit 16 of the charging circuit 100 includes a plurality of resistor networks 62 and a multiplexer 64. Each resistor network 63 (e.g., resistor network 1 through resistor network N) simulates a different plug-in profile for different electronic devices. When an electronic device is coupled to the port 13, the multiplexer 64 cycles through the different resistor networks 63 until the appropriate resistor network 63 is identified by the connected device 11. Once the electronic device 11 identifies the appropriate resistor network 63, the output from the current-to-voltage converter 26 becomes larger than the reference voltage 28 such that the comparator 24 outputs the Lo signal (logic "0") to the oscillator 22 to hold the power switch 14 in the closed state.

The illustrated multiplexer 64 is coupled to the oscillator 22 such that the multiplexer 64 cycles through the resistor networks 63 concurrently with the power switch 14 oscillating between the open and closed states. For example, each time the power switch 14 switches to the open state, a counter within the multiplexer 64 increases by one to move on to the next resistor network 63. When the power switch 14 then switches back to the closed state, the next resistor network 63 in the series is coupled to the port 13 through the multiplexer 64.

In other embodiments, a manual switch may be used to connect the appropriate resistor network 63 to the electronic device 11 for recognition by the electronic device 11. In such embodiments, the manual switch may be actuated by a user to cycle through the resistor networks 63. For example, the manual switch may include a rotary dial, one or more pushbuttons, a toggle switch, or the like, such that different positions of the manual switch correspond to different resistor networks 63.

Other operations of the charging circuit 100 to charge and sync the electronic device 11 are substantially the same as the charging circuit 10 discussed above.

Various features and advantages of the invention are set forth in the following claims.

## Claims

1. A charging circuit (10) for charging a portable electronic device (11) from a power supply (12), the charging circuit (10) comprising:
a port (13) configured to be coupled to the portable electronic device (11);
a power switch (14) coupled to the port (13) and configured to be coupled to the power supply (12), the power switch (14) switchable between an open state and a closed state; and
a control circuit (16) coupled to the power switch (14) and the port (13), the control circuit (16) operable to control the power switch (14) based on an amount of charging current drawn by the portable electronic device (11) through the port (13).

2. The charging circuit (10) of claim 1, wherein the control circuit (16) converts the amount of charging current drawn by the portable electronic device (11) to a voltage, compares the voltage to a reference voltage (28), and holds the power switch (14) in the closed state if the voltage exceeds the reference voltage (28).

3. The charging circuit (10) of claim 1 or 2, wherein the control circuit (16) includes an oscillator (22) coupled to the power switch (14), and wherein the oscillator (22) oscillates the power switch (14) between the open state and the closed state.

4. The charging circuit (10) of claim 3, wherein the control circuit (16) further includes a current-to-voltage converter (26) coupled to the port (13) and the power switch (14), and wherein the current-to-voltage converter (26) converts the amount of charging current drawn by the portable device (11) through the port (13) to a voltage.

5. The charging circuit (10) of claim 4, wherein the current-to-voltage converter (26) includes a precision resistor (38) and an amplifier (40).

6. The charging circuit (10) of claim 4, wherein the control circuit (16) further includes a comparator (24) coupled to the oscillator (22) and the current-to-voltage converter (26), and wherein the comparator (24) compares the voltage to a reference voltage (28) and, if the voltage exceeds the reference voltage (28), stops oscillation of the oscillator (22) to hold the power switch (14) in the closed state.

7. The charging circuit (10) of any one of the preceding claims, further comprising a data switch (56) coupled to the port (13), wherein the data switch (56) is operable to transfer data between the portable electronic device (11) and a host device (58).

8. The charging circuit (10) of claim 7, wherein the data switch (56), when actuated, overrides the control circuit (16) and holds the power switch (14) in the closed state.

9. The charging circuit (10) of any one of the preceding claims, further comprising a resistor network (20) coupled to the port (13), wherein the resistor network (20) represents a charging profile of the portable electronic device (11).

10. The charging circuit (10) of any one of the preceding claims, further comprising:
a plurality of resistor networks (62) coupled to the port (13), each resistor network (62) representing a different charging profile; and
a multiplexer (64) coupled between the plurality of resistor networks (62) and the port (13), the multiplexer (64) operable to cycle through the plurality of resistor networks (62) and to select one of the plurality of resistor networks (62) that has a charging profile corresponding to a charging profile of the portable electronic device (11).

11. The charging circuit (10) of any one of the preceding claims, wherein the control circuit (16) is further operable to cease operation of the charging circuit (10) if the amount of charging current drawn by the portable electronic device (11) through the port (13) exceeds a predetermined threshold.

12. A method of charging a portable electronic device (11) with a charging circuit (10), the charging circuit (10) including a port (13), a power switch (14) coupled to a power supply (12), an oscillator (22) coupled to the power switch (14), a current-to-voltage converter (26) coupled to the port (13) and the power switch (14), and a comparator (24) coupled to the oscillator (22) and the current-to-voltage converter (26), the method comprising:
connecting the portable electronic device (11) to the port (13);
oscillating the power switch (14) between an open state and a closed state;
converting, by the current-to-voltage converter (26), a current drawn by the portable electronic device (11) into a voltage;
comparing, by the comparator (24), the voltage to a reference voltage (28);
outputting a signal from the comparator (24) to the oscillator (22) to stop oscillation of the oscillator (22) and hold the power switch (14) in the closed state when the voltage meets a condition with respect to the reference voltage (28); and
charging the portable electronic device (11) while the power switch (14) is in the closed state.

13. The method of claim 12, having one or more of the following features:
- wherein outputting the signal from the comparator (24) includes outputting the signal from the comparator (24) to the oscillator (22) to stop oscillation of the oscillator (22) and hold the power switch (14) in the closed state when the voltage exceeds the reference voltage (28);
- wherein the charging circuit (10) further includes a data switch (56) coupled to the port (13), and further comprising actuating the data switch (56) to transfer data between the portable electronic device (11) and a host device (58).

14. The method of claim 12, wherein the charging circuit (10) further includes a plurality of resistor networks (62) and a multiplexer (64) coupled between the plurality of resistor networks (62) and the port (13), wherein each resistor network (62) has a different charging profile, and further comprising:
cycling through the plurality of resistor networks (62); and
selecting one of the plurality of resistor networks (62) that has a charging profile corresponding to a charging profile of the portable electronic device (11).

15. The method of claim 14, wherein the multiplexer (64) is coupled to the oscillator (22), and wherein cycling through the plurality of resistor networks (62) includes oscillating the oscillator (22) to trigger the multiplexer (64) to cycle through the plurality of resistor networks (62).
